Europäisches Patentamt

(19) European Patent Office

Office européen des brevets

(11) Publication number: **0 111 024**
**B1**

(12) **EUROPEAN PATENT SPECIFICATION**

(45) Date of publication of patent specification: **16.06.87**

(51) Int. Cl.⁴: **G 21 C 15/24, F 04 D 29/04**

(21) Application number: **82111481.6**

(22) Date of filing: **10.12.82**

(54) Internal pump.

(43) Date of publication of application:
**20.06.84 Bulletin 84/25**

(45) Publication of the grant of the patent:
**16.06.87 Bulletin 87/25**

(84) Designated Contracting States:
**AT DE GB**

(56) References cited:
**DE-A-2 525 782**
**DE-B-2 259 832**
**FR-A-1 248 341**
**GB-A-1 150 777**
**US-A-3 723 247**

(73) Proprietor: **Hitachi, Ltd.**
**5-1, Marunouchi 1-chome**
**Chiyoda-ku Tokyo 100 (JP)**

(72) Inventor: **Okada, Akihisa Tsukuba-Apartment**
**House 1-108**
**2625-3, Shimoinayoshi Chiyodamura**
**Niihari-gun Ibaraki-ken (JP)**

(74) Representative: **Finck, Dieter et al**
**Patentanwälte v. Füner, Ebbinghaus, Finck**
**Mariahilfplatz 2 & 3**
**D-8000 München 90 (DE)**

**Description**

# BACKGROUND OF THE INVENTION
Field of the Invention

The present invention relates to a wet-motor type internal pump for circulating cooling water through a nuclear reactor.

## DESCRIPTION OF THE PRIOR ART

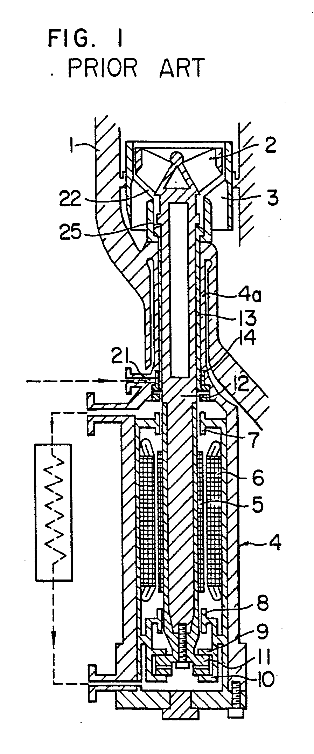

Fig. 1 shows a conventional internal pump for circulating cooling water through a nuclear reactor. This pump is a wet-motor type pump installed on the bottom of the pressure vessel 1 of the nuclear reactor. This internal pump has an impeller 2 and a diffuser 3 which are disposed in the pressure vessel 1, and a motor case which accommodates various parts such as a motor rotor 5, motor stator 6, upper journal bearing 7, lower journal bearing 8, thrust bearing pads 9 and 10 and a thrust bearing disc 11 which serves also as an auxiliary impeller for motor cooling water.

The diffuser 3 is stretched by a stretch tube 13 and a nut 14 so as to be pressed against the upper end surface of the bottom of the pressure vessel 1. The impeller 2 and the motor rotor 5 are coupled to each other through a shaft 12.

During running of the pump, the water temperature in the pressure vessel 1 is as high as 300°C. However, in order to prevent any deterioration of performance of the parts in the motor case 4 such as windings on the motor stator 6 and bearings 7, 8, 9 and 10, it is necessary that the water temperature for cooling the motor should be maintained sufficiently low, e.g. at 40°C.

When both of the nuclear reactor and the pump are operating, the water in the motor case 4 is forcibly circulated between the internal space of the motor case and an external heat exchanger by means of the auxiliary impeller 11 so as to discharge the heat generated in the motor and the heat transmitted from the pressure vessel 1. However, when the pump is stopped while the nuclear reactor is operating, the forced circulation of cooling water by the auxiliary impeller 11 cannot be performed any more, so that the removal of heat transmitted from the pressure vessel 1 is achieved solely by the natural convection of water which is caused by the water temperature difference in the motor case 2. In order that sufficiently low water temperature is maintained in the motor, it is the most important subject in the internal pump to adopt a motor case nozzle structure which minimizes the heat transmission from the nuclear pressure vessel 1.

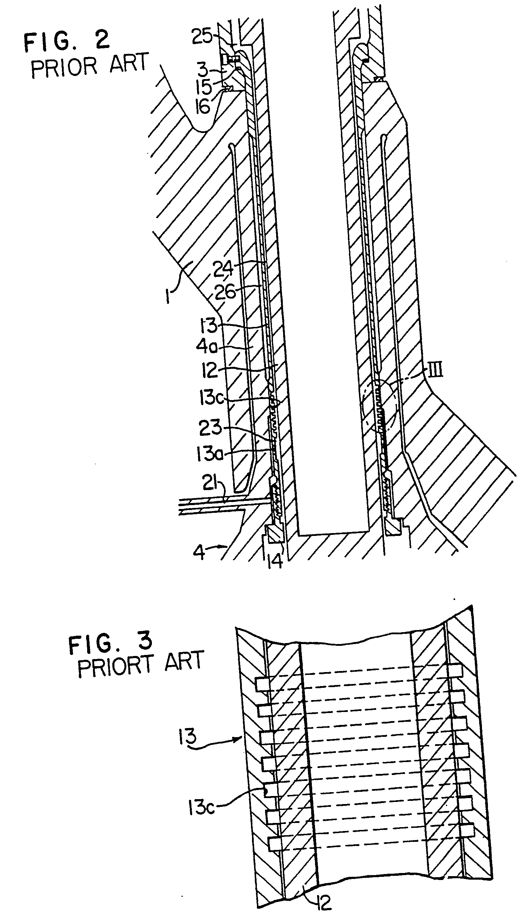

In the design of the internal pump, various attempts and proposals have been made concerning the motor case nozzle 4a, stretch tube 13 and the shaft 12, in order to diminish as much as possible the heat transfer from the pressure vessel 1 of the nuclear reactor to the motor case 4. One of such attempts and proposals is to adopt such a construction as to pour purge water into the motor case 4 through a port formed in a portion of the stretch tube 13 near the lower end thereof and to discharge a part of the purge water into the pressure vessel 1 of the nuclear reactor through the gap 22 between the impeller 2 and the diffuser 3. By adopting this arrangement, it is possible to effectively reduce the heat transfer from the pressure vessel 1 of the nuclear reactor into the motor case 4 by making an efficient use of the purge water which is originally intended for preventing the contaminants in the pressure vessel 1 from coming into the motor case 4. As shown in Fig. 2, the purge water poured from the port 21 flows into the gap between the nozzle 4a of the motor case 4 and the nut 14 and then introduced into the lower gap 23 between the shaft 12 and the stretch tube 13 through one or more apertures 13a formed in the stretch tube 13. The water then flows through the upper gap 24 into a gap 25. This flows of water effectively cools the inner peripheral surface of the stretch tube 13 and the outer peripheral surface of hollow portion of the shaft 12 thereby to carry away the heat which has been transmitted to the motor case 4 from the pressure vessel 1 of the nuclear reactor. As shown in Fig. 3, a labyrinth 13c is provided on the portion surrounded by an ellipse III (see Fig. 2) of the inner peripheral surface of the stretch tube 13 so as to further improve the cooling effect.

In this conventional arrangement of the stretch tube 13 and the motor case nozzle 4a, an annular gap 26 for heat insulation is preserved between the nozzle 4a of the case 4 sealed at the upper end by the metallic gasket or "O" ring 15 and the stretch tube 13. It is quite inconvenient that water or air stagnates in this gap to create such a condition as to promote a gap corrosion of the outer peripheral surface of the stretch tube 13 and the motor case nozzle 4a. The gap corrosion, once it has occurred, may lead to a serious accident such as brittle rupture of the stretch tube 13, not to mention to a difficulty in the withdrawal of the stretch tube 13 from the motor case nozzle 4a.

## SUMMARY OF THE INVENTION

Accordingly, it is a primary object of the invention to provide an internal pump improved to prevent the gap corrosion in the area between the stretch tube and the nozzle of motor case and to further diminish the heat transfer from the pressure vessel of the nuclear reactor to the motor case.

To this end, according to the invention and particularly to claim 1, the passage for the purge water is determined such that the purge water poured from the outside of the motor case in the region near the lower end of the stretch tube flows not only into the gap between the shaft and the stretch tube but also into the gap between the stretch tube and the motor case nozzle and is discharged into the pressure vessel of the nuclear reactor through the gap between the impeller and the diffuser of the pump.

Other objects, features and advantages of the invention will become clear from the following description of the preferred embodiments taken in conjunction with the accompanying drawings.

## BRIEF DESCRIPTION OF THE DRAWINGS

Fig. 1 is a diagramatically fragmental vertical sectional view of a conventional internal pump;

Fig. 2 is a vertical sectional view of a motor case nozzle of the internal pump shown in Fig. 1;

Fig. 3 is an enlarged sectional view of a portion marked at III in Fig. 2;

Fig. 4 is a vertical sectional view of the motor case nozzle in accordance with an embodiment of the invention;

Fig. 5 is an enlarged sectional view of a portion marked at V in Fig. 4;

Fig. 6 is a sectional view taken along the line VI—VI of Fig. 5;

Fig. 7 is a sectional view similar to that in Fig. 5, showing a modification of a communication passage;

Fig. 8 is a sectional view similar to that in Fig. 5, showing another modification of the communication passage;

Fig. 9 is a sectional view taken along the line IX—IX of Fig. 8;

Fig. 10 is a sectional view taken along the line X—X of Fig. 8; and

Fig. 11 is a sectional view similar to that in Fig. 4 for another embodiment of the invention.

## DETAILED DESCRIPTION OF THE PREFERRED EMBODIMENTS

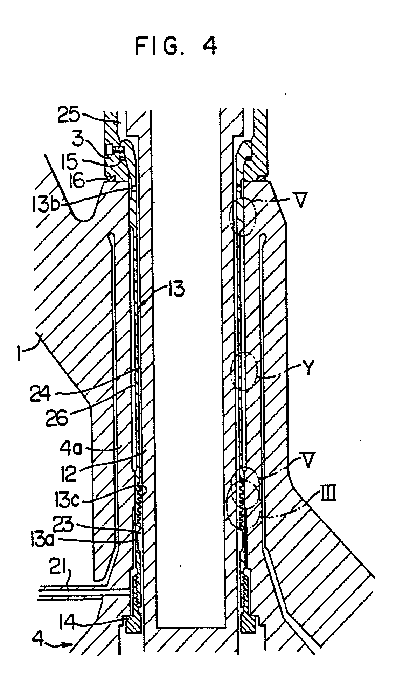

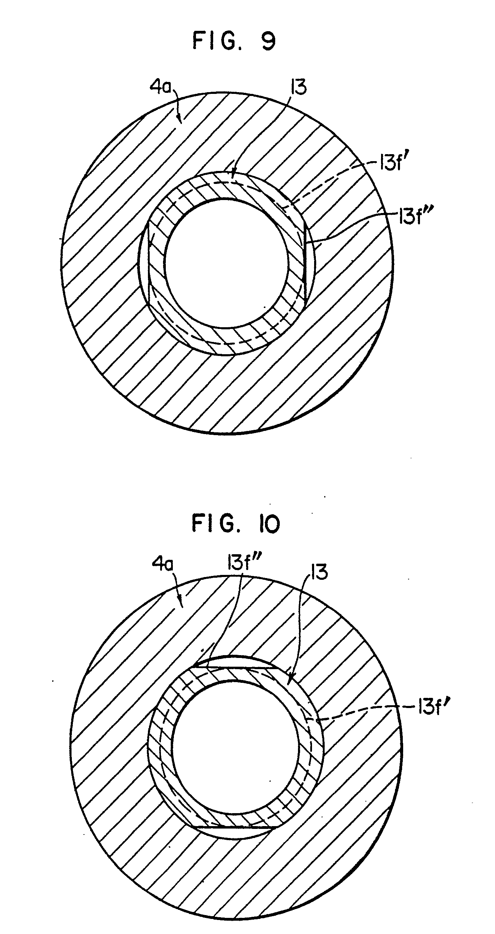

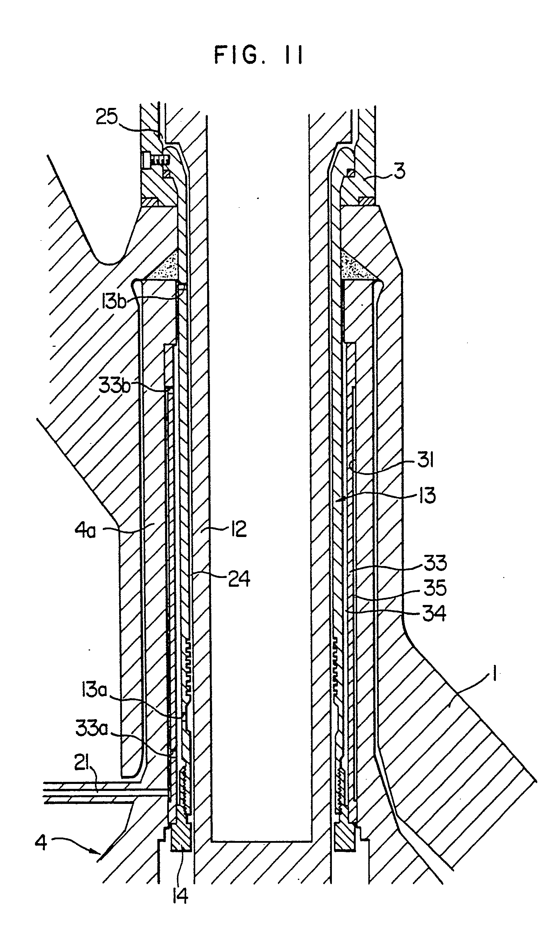

A first embodiment of the invention will be described hereinunder with specific reference to Figs. 4 through 10. In Figs. 4 through 10, the same reference numerals are used to denote the same parts or members as those used in Figs. 1 through 3, and detailed explanation of such parts or members is omitted for the simplification of description.

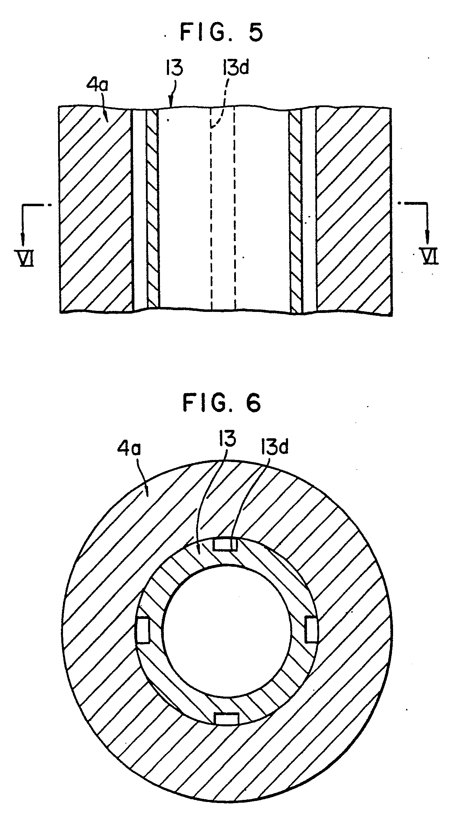

Fig. 4 shows the construction of an internal pump carrying out the present invention. One or more holes 13b are formed in the portion of the stretch tube 13 near the upper end thereof. As will be seen from Figs. 5 and 6, vertical grooves 13d are formed in the outer peripheral surface of the stretch tube 13 in the areas surrounded by an ellipse V of the motor case nozzle 4a where the distance between the stretch tube 13 and the motor nozzle 4a is extremely small. The purge water poured into the motor case nozzle 4a through a port 21 (see Fig. 4) is made to flow into the gaps 23 and 24 between the shaft 12 and the stretch tube 13 through the holes 13a and, at the same time, introduced through the vertical grooves 13d into an annular gap 26 defined between the stretch tube 13 and the motor case nozzle 4a. The purge water introduced into the gap 26 then flows through the portion of the grooves 13d near the upper end of the stretch tube 13 and then through the holes 13b so as to merge in the purge water which has been introduced through the gap 24. The water then flows into the gap.

With this arrangement, it is possible to continuously supply the gap 26 between the stretch tube 13 and the motor case nozzle 4a with fresh purge water. It is, therefore, possible to avoid any gap corrosion in the surfaces of the stretch tube 13 and the motor case nozzle 4a defining the gap 26 and, in addition, to reduce the rate of heat transfer from the pressure vessel 1 of the nuclear reactor to the motor case 4 because the purge water effectively cools the inner peripheral surface of the motor case nozzle 4a.

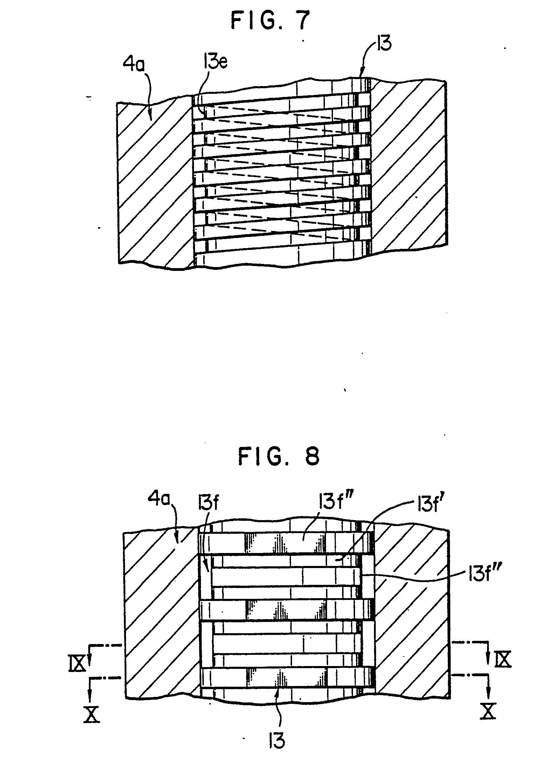

In place of the vertical grooves shown in Figs. 5 and 6, it is possible to use a screw-thread groove 13e as shown in Fig. 7 or a winding groove 13f as shown in Figs. 8, 9 and 10. By so doing, the purge water is allowed to flow not only in the vertical direction but also in circumferential direction, thereby to uniformalize the circumferential temperature distribution of the motor case nozzle caused by an asymmetrical shape of the portion of the pressure vessel 1 where the internal pump is secured with respect to the axis of the shaft 12. As will be seen from Figs. 8 to 10, the winding groove 13f is constituted by a plurality of circumferential grooves 13f' in the outer peripheral surface of the stretch tube 13 and notches 13f'' formed alternatingly at a 90° offset in the flanges separating the circumferential grooves 13f', so that the purge water introduced into the gap 26 is made to wind with respect to the axis of the stretch tube 13. It is possible to adopt the screw-thread groove shown in Fig. 7 or a winding groove shown in Fig. 8 in the area surrounded by an ellipse Y in Fig. 4. By so doing, it is possible to further uniformalize the circumferential temperature distribution.

Fig. 11 shows an internal pump in accordance with a second embodiment of the invention in which the same reference numerals are used to denote the same parts or members as those appearing in Figs. 4 through 10, and detailed description of such parts or members is omitted.

In the internal pump of the second embodiment, the nozzle 4a of the motor case 4 is provided in its inner surface with a circumferential recess 31 which cooperates with the external surface of the stretch tube 13 in defining a gap similar to the gap 26 shown in Fig. 4. A compression force of the same level as the tensile force loading the stretch tube is applied to a thermal sleeve 33 through a stretch tube nut 32. Namely, the thermal tube 33 is disposed coaxially with the stretch tube 13 within a gap defined by the recess 33 and the outer peripheral surface of the stretch tube 13 so as to divide the space of the gap into radial inner and outer gap sections 34 and 35. The thermal sleeve 33 is provided with one or more lower holes 33a across the thickness thereof at a portion near the port 21, as well as one or more upper holes 33b formed across the thickness thereof at portions away from the port 21. The holes 13a and 13b in the stretch tube 13 and the holes 33a and 33b in the thermal sleeve 33 permits the purge water to flow not only through the gap 24 between the shaft 12 and the stretch tube 13 but also through the inner gap section 34 between the stretch tube 13 and the thermal sleeve 33, as well as the outer gap section 35 between the thermal sleeve 33 and the motor case nozzle 4a, to reach the gap 25. Therefore, the undesirable stagnation of dead water in the inner and outer gap sections 34 and 35 and, hence, the gap corrosion of the constituents defining these gap sections are prevented effectively. The stretch tube 13 taking the radially innermost position is kept at a temperature lower than the thermal sleeve 33 which in turn is kept at the temperature which is lower than the motor case nozzle 4a taking the radially outermost position. It is, therefore, possible to reduce the tensile thermal stress generated in the stretch tube 13. This effect is remarkable particularly when the temperature of the motor case nozzle changes abruptly as in the transient period of operation of the nuclear reactor, so that the application of excessive thermal stress on the stretch tube loaded with initial tensile stress is avoided effectively. Furthermore, provided that the stretch tube 13 and the thermal sleeve 33 are made to have an equal cross-sectional area perpendicular to the axis, the thermal expansion of the thermal sleeve is effectively born by the compression deformation of the thermal sleeve 33 and the tensile deformation of the stretch tube 13, so that the thermal stress generated in the stretch tube 13 can be further decreased advantageously.

As has been described, according to the invention, it is possible to prevent the gap corrosion of the structural members of the internal pump, while decreasing the heat transfer from the pressure vessel of a nuclear reactor to the motor case advantageously.

In addition, by adopting a suitable modification of the grooves in the peripheral surface of the stretch tube, it is possible to uniformalize the circumferential temperature distribution in the motor case nozzle. It will be seen that the present invention offers various practical advantages.

Although the invention has been described through specific terms, it is to be noted here that the described embodiments are not exclusive and various changes and modifications may be imparted thereto without departing from the scope of the invention which is limited solely by the appended claims.

## Claims

1. A wet-motor type internal pump having
— a wet motor situated on the bottom of the pressure vessel (1) of a nuclear reactor,
— an impeller (2) fixed to the end of a motor shaft (12) extending through the case (4) of said motor and disposed in the bottom portion of the space in said pressure vessel (1),
— a diffuser (3) disposed at the downstream side of said impeller (2),
— a stretch tube (13) surrounding said motor shaft (12) and pulling said diffuser (3) downwardly to fix said diffuser (3) at a predetermined position,
— a gap (23, 24) between said motor shaft (12) and said stretch tube (13),
— an annular gap (26) between said stretch tube (13) and a nozzle (4a) of said motor case (4),

— an inlet port (21) to pour purge water into said nozzle (4a) of said motor case (4),
— a purge water hole (13a) formed in the lower end portion of said stretch tube (13), through which purge water is introduced into the gap (23, 24) between said motor shaft (12) and said stretch tube (13) so as to cool the inside of said wet motor and to prevent the invasion of cooling water from said pressure vessel (1) into said gaps (23, 24), characterized in that at least one communication hole (13b) is formed in the upper end portion of said stretch tube (13) so as to provide a communication between the inner and outer peripheral surfaces of said stretch tube (13).

2. The wet-motor type internal pump according to claim 1, characterized in that
— said annular gap (26) between said stretch tube (13) and said nozzle (4a) of said motor case (4) is defined by a recess formed in the outer peripheral surface of said stretch tube (13)
— and there are provided grooves (13d, 13e, 13f', 13f'') formed also in the outer peripheral surface of said stretch tube (13),
— one portion of said grooves (13d, 13e, 13f', 13f'') being disposed near the lower end of said stretch tube (13) to introduce purge water coming through said inlet port (21) into said annular gap (26)
— and a second portion of said grooves (13d, 13e, 13f', 13f'') being disposed near the upper end of said stretch tube (13) to introduce a part of said purge water flowing into said annular gap (26) through said communication hole (13b) into the gap (23, 24) between said motor shaft (12) and said stretch tube (13).

3. The wet-motor type internal pump according to claim 2, characterized in that said grooves provided in said stretch tube (13) are circumferentially spaced vertical grooves (13d) (Fig. 5 and 6).

4. The wet-motor type internal pump according to claim 2, characterized in that said grooves provided in said stretch tube (13) are screw-thread grooves (13e) (Fig. 7).

5. The wet-motor type internal pump according to claim 2, characterized in that said grooves provided in said stretch tube (13) are winding grooves (13f, 13f', 13f'') (Fig. 8).

6. A wet-motor type internal pump according to claim 1, characterized in that there is provided a thermal sleeve (33) disposed in said annular gap (26) between said stretch tube (13) and said nozzle (4a) of said motor case (4) coaxially with said stretch tube (13) so as to divide said gap (26) into a radially outer gap section (35) and a radially inner gap section (34), which are in communication with each other (Fig. 11).

## Patentansprüche

1. Innenpumpe in Naß-Motorbauweise mit
— einem am Boden des Druckbehälters (1) eines Kernreaktors angeordneten Naß-Motor,
— einem Laufrad (2), das an einem Ende einer Motorwelle (12) befestigt ist, die sich durch das Gehäuse (4) des Motors erstreckt und im unteren Abschnitt des Raums in dem Druckbehälter (1) angeordnet ist,

— einem auf der Stromabseite des Laufrads (2) angeordneten Diffusor (3),

— einem die Motorwelle (12) umgebenden und den Diffusor (3) nach unten ziehenden Spannrohr (13), um den Diffusor (3) in einer vorgegebenen Stellung festzulegen,

— einem Spalt (23, 24) zwischen der Motorwelle (12) und dem Spannrohr (13),

— einem Ringspalt (26) zwischen dem Spannrohr (13) und einem Rohransatz (4a) des Motorgehäuses (4),

— einer Einlaßöffnung (21) zum Durchstrom von Durchspülwasser in den Rohransatz (4a) des Motorgehäuses (4),

— einem im unteren Endabschnitt des Spannrohrs (13) ausgebildeten Durchspülwasserloch (13a), durch welches Durchspülwasser in den Spalt (23, 24) zwischen der Motorwelle (12) und dem Spannrohr (13) so eingeführt wird, daß die Innenseite des Naß-Motors gekühlt und ein Eindringen von Kühlwasser vom Druckbehälter (1) in die Spalte (23, 24) unterbunden wird, dadurch gekennzeichnet, daß

— wenigstens eine Verbindungsöffnung (13b) in dem oberen Endabschnitt des Spannrohrs (13) ausgebildet ist, um eine Verbindung zwischen der inneren und äußeren Umfangsfläche des Spannrohrs (13) herzustellen.

2. Innenpumpe in Naß-Motorbauweise nach Anspruch 1, dadurch gekennzeichnet, daß

— der Ringspalt (26) zwischen dem Spannrohr (13) und dem Rohransatz (4a) des Motorgehäuses (4) von einer Aussparung gebildet ist, die in der äußeren Umfangsfläche des Spannrohrs (13) ausgebildet ist,

— und Nuten (13d, 13e, 13f, 13f'') vorgesehen sind, die ebenfalls in der äußeren Umfangsfläche des Spannrohrs (13) ausgebildet sind,

— wobei ein Teil der Nuten (13d, 13e, 13f', 13f'') in der Nähe des unteren Endes des Spannrohrs (13) angeordnet ist, um durch die Einlaßöffnung (21) kommendes Durchspülwasser in den Ringspalt (26) einzuführen,

— und ein zweiter Teil der Nuten (13d, 13e, 13f', 13f'') in der Nähe des oberen Endes des Spannrohrs (13) angeordnet ist, um einen Teil des in den Ringspalt (26) durch die Verbindungsöffnung (13b) strömenden Durchspülwassers in den Spalt (23, 24) zwischen der Motorwelle (12) und dem Spannrohr (13) einzuführen.

3. Innenpumpe in Naß-Motorbauweise nach Anspruch 2, dadurch gekennzeichnet, daß die in dem Spannrohr (13) vorgesehenen Nuten am Umfang im Abstand angeordnete vertikale Nuten (13d) sind (Fig. 5 und 6).

4. Innenpumpe in Naß-Motorbauweise nach Anspruch 2, dadurch gekennzeichnet, daß die in dem Spannrohr (13) vorgesehenen Nuten Schraubengewindenuten (13e) sind (Fig. 7).

5. Innenpumpe in Naß-Motorbauweise nach Anspruch 2, dadurch gekennzeichnet, daß die in dem Spannrohr (13) vorgesehenen Nuten Windungsnuten (13f, 13f', 13f'') sind (Fig. 8).

6. Innenpumpe in Naß-Motorbauweise nach Anspruch 1, dadurch gekennzeichnet, daß eine Wärmehülse (33) in dem Ringspalt (26) zwischen dem Spannrohr (13) und dem Rohransatz (4a) des Motorgehäuses (4) koaxial zu dem Spannrohr (13) so angeordnet ist, daß der Spalt (26) in einen radial äußeren Spaltabschnitt (35) und einen radial inneren Spaltabschnitt (34) unterteiltwird, die miteinander in Verbindung stehen (Fig. 11).

**Revendications**

1. Pompe interne du type à moteur immergé comportant

— un moteur immergé disposé au fond de la cuve sous pression (1) d'un réacteur nucléaire,

— un rotor (2) qui est fixé à l'extrémité d'un arbre de moteur (12) s'étendant à travers le carter (4) dudit moteur et qui est disposé dans la partie inférieure du volume intérieur de ladite cuve sous pression (1),

— un diffuseur (3) disposé sur le côté aval dudit rotor (2),

— un tube de tension (13) qui entoure ledit arbre de moteur (12) et applique une traction vers le bas sur ledit diffuseur (3) afin de fixer ce diffuseur (3) dans une position prédéterminée,

— un intervalle (23, 24) situé entre ledit arbre de moteur (12) et ledit tube de tension (13), .

— un intervalle annulaire (26) situé entre ledit tube de tension (13) et un col (4a) dudit carter de moteur (4),

— un orifice d'entrée (21) servant à verser de l'eau de purge dans ledit col (4a) du carter de moteur (4),

— un trou d'eau de purge (13a) qui est ménagé dans la partie extrême inférieure dudit tube de tension (13) et à travers lequel de l'eau de purge est introduite dans l'intervalle (23, 24) situé entre ledit arbre de moteur (12) et ledit tube de tension (13) de manière à refroidir l'intérieur dudit moteur immergé et à empêcher l'invasion d'eau de refroidissement dans lesdits intervalles (23, 24) à partir de ladite cuve sous pression (1), caractérisée en ce qu'au moins un trou de communication (13b) est ménagé dans la partie extrême supérieure dudit tube de tension (13) de manière à fournir une communication entre les surfaces périphériques interne et externe de ce tube de tension (13).

2. Pompe interne du type à moteur immergé selon la revendication 1, caractérisée en ce que

— ledit intervalle annulaire (26) situé entre ledit tube de tension (13) et ledit col (4a) du carter de moteur (4) est constitué par une partie en renfoncement ménagée dans la surface périphérique externe dudit tube de tension (13),

— et il est prévu des gorges (13d, 13e, 13f', 13f'') qui sont également ménagées dans cette surface périphérique externe dudit tube de tension (13),

— une partie desdites gorges (13d, 13e, 13f', 13f'') étant disposée à proximité de l'extrémité inférieure dudit tube de tension (13) de manière à introduire dans ledit intervalle annulaire (26) de l'eau de purge arrivant par ledit orifice d'entrée (21),

— et une seconde partie desdites gorges (13d, 13e, 13f', 13f'') étant disposée à proximité de l'extrémité supérieure dudit tube de tension (13) de manière à introduire dans l'intervalle (23, 24) situé entre ledit arbre de moteur (12) et ledit tube de tension (13) et par l'intermédiaire dudit trou de communication (13b), une partie de ladite eau de purge qui s'écoule dans ledit intervalle annulaire (26).

3. Pompe interne du type à moteur immergé selon la revendication 2, caractérisée en ce que lesdites gorges ménagées dans ledit tube de tension (13) sont des gorges verticales espacées dans le sens circonférentiel (13d) (figs. 5 et 6).

4. Pompe interne du type à moteur immergé selon la revendication 2, caractérisée en ce que lesdites gorges ménagées dans ledit tube de tension (13) sont des gorges de filet devis (13e) (fig. 7).

5. Pompe interne du type à moteur immergé selon la revendication 2, caractérisée en ce que lesdites gorges ménagées dans ledit tube de tension (13) sont des gorges enveloppantes (13f, 13f', 13f'') (fig. 8).

6. Pompe interne du type à moteur immergé selon la revendication 1, caractérisée en ce qu'il est prévu un fourreau thermique (33) qui est disposé dans ledit intervalle annulaire (26) situé entre ledit tube de tension (13) et ledit col (4a) du carter de moteur (4), de manière coaxiale à ce tube de tension (13) de façon à diviser ledit intervalle (26) en une section d'intervalle (35) extérieure dans le sens radial et une section d'intervalle (34) intérieure dans le sens radial qui communiquent l'une avec l'autre (fig. 11).

FIG. 1
. PRIOR ART

FIG. 2
PRIOR ART

25
3
15
16

1

24
26

13
4a
12
13c

23
13a

21

4 →

14

III

FIG. 3
PRIORT ART

13

13c

12

# FIG. 4

FIG. 5

FIG. 6

## FIG. 7

## FIG. 8

FIG. 9

FIG. 10

# FIG. II